# EUROPÄISCHE PATENTSCHRIFT

(11) **EP 1 685 887 B1**
(45) Veröffentlichungstag und Bekanntmachung des Hinweises auf die Patenterteilung: **27.05.2009**
(21) Anmeldenummer: 04719163.0
(22) Anmeldetag: 10.03.2004
(51) Int. Cl.: B01D 15/00, B01D 15/08, G01N 30/02, G01N 30/96

(54) **ELEKTRODIALYSEELUATIONSMITTELGENERATOR FÜR IONENCHROMATOGRAPHIE**
ELECTRODIALYSIS ELUENT GENERATOR FOR ION CHROMATOGRAPHY
GENERATEUR D'ELUANT PAR ELECTRODIALYSE POUR CHROMATOGRAPHIE PAR ECHANGE D'IONS

(30) Priorität: 12.11.2003 RU 2003132803
(43) Veröffentlichungstag der Anmeldung: 02.08.2006
(73) Patentinhaber: Pridantsev, Alexandr Alexeevich, Moscow, 119296 (RU); Shatalov, Igor Alexeevich, Moskovskaya obl. 142602 (RU); Gursky, Vladimir Sergeevich, Leningradskaya obl. 188540 (RU)
(72) Erfinder: Pridantsev, Alexandr Alexeevich, Moscow, 119296 (RU); Shatalov, Igor Alexeevich, Moskovskaya obl. 142602 (RU); Gursky, Vladimir Sergeevich, Leningradskaya obl. 188540 (RU)
(74) Vertreter: Jeck, Anton
(86) Internationale Anmeldenummer: PCT/RU2004/000025
(87) Internationale Veröffentlichungsnummer: WO 2005/046833

(56) Entgegenhaltungen:
- EP-A- 1 685 886
- SU-A1- 1 741 852
- US-A- 5 045 204
- US-A- 6 027 643
- US-A1- 2003 127 392
- US-B1- 6 225 129
- LIU Y ET AL: "Recent developments in electrolytic devices for ion chromatography" JOURNAL OF BIOCHEMICAL AND BIOPHYSICAL METHODS, AMSTERDAM, NL, vol. 60, no. 3, 30 September 2004 (2004-09-30), pages 205-232, XP004549972 ISSN: 0165-022X

## Beschreibung

Die Erfindung gehört zum Bereich der ionenchromatografischen Analyse, und zwar zum Bereich von Einrichtungen zur Elutionsmittelerzeugung für die lonenchromatografie.

Eines der wirksamsten Analyseverfahren von anionischen Komponenten in Wasserlösungen ist die Ionenchromatografie. Mit diesem Verfahren werden die zu bestimmenden Anionen der Probe in einer analytischen Säule mittels Alkalielutionsmitteln (Lösungen von schwachen Säuren und starken Basen, Hydroxiden der Alkalimetalle usw.) mit einer weiteren konduktometrischen Detektion getrennt. Obwohl Lösungen von Alkalimetallen bei der Trennung und Anionenanalyse die wirksamsten Elutionsmittel sind (ein wesentlich niedriges Niveau der Hintergrundleitfähigkeit des analytischen Signals nach der Unterdrückung, sicher prognostizierende Elutionsdaten, keine Systempeaks in den Chromatogrammen), ist ihre Anwendung bislang wegen der Komplexität der Zubereitung von reinen Hydroxidlösungen und der Aufrechterhaltung von Elutionsdaten beschränkt: ein beliebiger Elutionsmittelkontakt (bei der Zubereitung bzw. der Anwendung) mit Luft führt zu einer nicht beherrschbaren Änderung der Elutionsmitteldaten infolge einer Absorption des atmosphärischen CO₂-Gases aus dem Elutionsmittel sowie zu einer Erhöhung der Hintergrundleitfähigkeit des Elutionsmittels nach dem Druckabbau.

Bekannt ist eine Einrichtung zur diffusen Erzeugung eines Alkalielutionsmittels (W. S. Gurskij, L. A. Godon, S. W. Timofejew, Erzeuger für Hydroxidelutionsmittel zur ionenchromatografischen Anionenbestimmung, "Zh. Werkslabor", Band 63, Nr. 12, S. 11, 1997). In dieser Einrichtung wird hochreines Wasser durch Kationenaustauschkapillare geleitet, deren Außenfläche mit der konzentrierten Lösung einer Lauge, z. B. Kaliumhydroxid, in Berührung kommt. Unter der Wirkung des Konzentrationsgradienten diffundiert Kaliumhydroxid in das Innere der Kapillare, und am Kapillarenausgang wird Kaliumhydroxidlösung (Elutionsmittel) gebildet, die in eine Trennsäule wandert. Weil Karbonate von Alkalimetallen in konzentrierten Laugenlösungen praktisch nicht löslich sind, enthält das in der Einrichtung zu erzeugende Elutionsmittel (Kaliumhydroxidlösung) keine Karbonationen. Die Konzentration von Kaliumhydroxid im Elutionsmittel wird mittels der Flussrate des Elutionsmittels durch die Kapillare bestimmt und kann durch die Kontaktfläche der konzentrierten Kaliumhydroxidlösung mit der Kapillare variiert werden.

Zu den Nachteilen der beschriebenen Einrichtung gehört, dass eine Vorrichtung zur Konstanthaltung der Temperatur nötig ist, da der diffuse Kaliumhydroxidfluss durch die Membran von der Temperatur abhängt. Außerdem kann die Einrichtung in der Elutionsmittellinie unter einem Druck von max. 3-4 at arbeiten und dementsprechend in der hydraulischen Linie des Hochdrucks in der Chromatografieeinrichtung (nach der Pumpe) nicht angeordnet werden.

Wesentlich wirksamer sind Einrichtungen zur Elutionsmittelerzeugung, in denen das Elutionsmittel infolge der Übertragung der benötigten Ionen durch den lonenaustauscher unter der Wirkung eines elektrischen Felds erzeugt wird. In diesem Fall kann die Elutionsmittelkonzentration durch Änderung der elektrischen Parameter, beispielsweise der Stromstärke, einfach variiert werden.

In der im US-Patent 5 045 204 beschriebenen Einrichtung wird nicht gereinigte Säure bzw. Base durch die Kanalquelle und längs einer selektiven lonenaustauschmembran geleitet, die die Kanalquelle vom Produktkanal abgrenzt. Durch den Produktkanal wird hochreines Wasser geleitet. Die Membran erlaubt ein selektives Durchlassen von Kationen bzw. Anionen. Zwischen den Kanälen wird ein solches elektrisches Potential erzeugt, das Basenkationen bzw. Säureanionen aus dem ersten in den letzten Kanal zur Erzeugung einer Base oder einer Säure mit elektrolytisch gebildeten Hydroxid- bzw. Wasserstoff-lonen wandern lässt. Das im Elutionsmittel elektrolytisch ausscheidende Gas hindert eine weitere chromatografische Trennung und Detektion. Gemäß dem Patent wird das Elutionsmittel durch eine Entgasungseinrichtung geleitet, in der der Kanal mit dem Elutionsmittel von dem Kanal mit dem Gas mittels einer gasselektiven Membran getrennt wird, die Gas durchlässt und Flüssigkeit zurückhält. Infolgedessen wird der Elutionsmittelfluss beim Durchlassen durch die gasselektive Membran von Gas befreit.

Als Prototyp für die vorliegende Erfindung wurde eine Einrichtung zur Säure- oder Basenerzeugung nach dem US-Patent 6 225 129 ausgewählt, die Folgendes enthält:
- einen lonenquellenbehälter für Anionen bzw. Kationen,
- eine Kammer zur Erzeugung einer Säure oder Base, wobei die Kammer ein Einlaufende und ein Auslaufende aufweist,
- eine Barriere zwischen dem Ionenquellenbehälter und der Elutionsmittelerzeugungskammer (Säure oder Base), die das Wandern der Flüssigkeit aus der Erzeugungskammer in den Behälter und zurück verhindert und gleichzeitig die lonenübertragung gewährleistet, wobei Ionen nur mit einer negativen oder positiven Ladung übertragen werden,
- eine Wasserlösungsquelle, die mit dem Einlaufende der Elutionsmittelerzeugungskammer verbunden ist,
- eine Elektrode im lonenquellenbehälter,
- eine zweite Elektrode in der Elutionsmittelerzeugungskammer,
- eine Stromquelle, die das Anlegen einer Potentialdifferenz zur Übertragung von Kationen (Anionen) in der Erzeugungskammer der Base bzw. Säure unter Wirkung eines elektrischen Felds gewährleistet,
- eine Einrichtung zur Entgasung des Elutionsmittels.

Die Einrichtung kann zur Erzeugung von Säure oder Base in einem chromatografischen System oder in einem anderen analytischen System, in dem hochreine Säuren oder Basen benötigt werden, eingesetzt werden.

Nach Angabe der Erfinder des Patentprototyps übertrifft der von ihnen vorgeschlagene Elutionsmittelerzeuger die bislang bekannten Einrichtungen wesentlich. Die Vorteile sind gemäß dem Patent folgende:
- eine chromatografische Trennung kann nur mit dem entionisierten Wasser als Elutionsmittel durchgeführt werden; da die Säure oder Base benötigter Qualität on-line erzeugt wird, kann eine spezielle Bereitung des Elutionsmittels ausgeschlossen werden;
- die Elutionsfähigkeit (Konzentration der Säure oder Base) kann genau und bequem kontrolliert werden, indem der Strom in der Einrichtung zur Erzeugung der Säure oder Base und die Flussrate überwacht wird;
- möglich sind eine chromatografische Gradiententrennung mittels einer Änderung des Stroms im Laufe der Eluierung und eine Anwendung einer kostengünstigen Pumpe in einer isokratischen Arbeitsweise statt einer teuren Pumpe zur Gradienteneluierung;
- die Anwendung der Einrichtung zur Erzeugung der Säure oder Base ermöglicht, das chromatografische Verfahren zu verbessern, da das on-line zu erzeugende Elutionsmittel von Beimischungen frei ist, die oft bei einer "externen" Elutionsmittelbereitung eingebracht werden; das durch Sorption des CO₂-Gases aus der Luft gewonnene Karbonat im Hydroxid-Elutionsmittel stört oft das chromatografische Verfahren. Dieses Problem wird durch den Einsatz eines on-line zu erzeugenden, hochreinen Hydroxid-Elutionsmittels gelöst.
- die Funktionssicherheit der Pumpen und deren Lebensdauer können erhöht werden, weil die Pumpe deionisiertes Wasser anstelle von korrosionsaggressiven Säuren und Basen pumpt;
- die Erfindung gemäß dem Patent stellt eine wesentliche Verbesserung bei der Erzeugung von Lösungen hochreiner Säuren und Basen für eine größere Zeitperiode zum Einsatz in der IC- und Flüssigchromatografie sowie für weitere Anwendungen sicher.

Zugleich weist die Einrichtung nach dem Patent eine Reihe von Nachteilen auf. In erster Linie ist das eine in der Einrichtung erzeugte, hohe Wärmeentwicklung, die durch den hohen elektrischen Widerstand der Wasserlösungen, die an Elektrolysegasen reich sind, bedingt ist.

Zur Verminderung der Wärmeentwicklung im System, insbesondere bei der benötigten Erzeugung der Elutionsmittel mit hoher Konzentration (bis 0,1 mol/l) wurden mehrere Ausführungsbeispiele der Einrichtung im Patent vorgeschlagen:
- es wurden zwei oder mehrere Ionenquellenbehältern eingesetzt, die mit der Elutionsmittelerzeugungskammer mittels zweier oder mehrerer Barrieren verbunden sind; der Vorteil beim Einsatz von zwei oder mehreren Kammern besteht darin, dass die im System herrschende Spannung dadurch vermindert werden kann, dass der zur Erzeugung von KOH eingesetzte Strom zwischen den einzelnen Kammern verteilt wird; somit können höhere Spannungen zur Erzeugung von Basen mit höherer Konzentration und gleichmäßigerer Entwicklung der Überschusswärme angelegt werden;
- in der Erzeugungskammer werden zwei oder mehrere Elektroden eingesetzt, die vorzugsweise längs der gesamten Kammerlänge in Richtung des Wasserflusses angeordnet sind, beispielsweise in der Nähe des Einlaufendes und Auslaufendes; dies vermindert den elektrischen Widerstand der Kammer und dementsprechend die Arbeitsspannung im System;
- es werden mehrere Barrieren in einem Behälter eingesetzt. Der Einsatz von mehreren Barrieren kann die Arbeitspannung der Einrichtung reduzieren. Als Folge kann in der Kammer der höhere Strom zur Erzeugung des Elutionsmittel in hoher Konzentration ohne Überschusswärmeentwicklung eingesetzt werden.

Nichtsdestoweniger ist der Einsatz dieser Ausführungsbeispiele zur Verminderung der Wärmeentwicklung mit einem komplizierten Aufbau des Elutionsmittelerzeugers verbunden. Ein weiterer und wichtiger Nachteil des Prototyps ist die Gasentwicklung in der Elutionsmittelerzeugungskammer, die dazu führt, dass eine weitere, direkte, chromatografische Trennung unmöglich ist.

Zur Beseitigung der störenden Wirkung der in der Elutionsmittelerzeugungskammer entwickelten Gase werden im Patentprototyp zwei Möglichkeiten genannt.

Im ersten Fall wird eine Flussabgrenzung zur Druckerhöhung im gesamten chromatografischen System (Elutionsmittelerzeuger-Trennsäulen-Detektor) nach dem Detektor angeordnet. Bei Hochdruck (z. B. 70at und mehr) löst sich das Gas im Elutionsmittel quasi völlig und beeinflusst den Lauf des chromatografischen Prozesses der Trennung und Detektion unwesentlich. Dieses Verfahren benötigt einen Detektor mit einer Durchflusszelle, die einem hohen Druck von 70at und mehr widerstehen kann. In der IC mit Unterdrückung der Elutionsmittelleitfähigkeit fordert das oben beschriebene Verfahren, dass auch der Suppressor dem Druck von 70at und mehr widerstehen kann. Dies macht den Detektor- und Suppressoraufbau wesentlich kompliziert und erlaubt keine chromatografische Standardsysteme einzusetzen.

Eine weitere Problemlösung der Gasentwicklung besteht in der Anordnung einer zusätzlichen Einrichtung zur Entgasung der Lösung nach dem Elutionsmittelerzeuger. Der Elutionsmittelfluss zusammen mit dem gelösten Gas wandert nach dem Elutionsmittelerzeuger unter Hochdruck in die polymerische Kapillare. Das Gas dringt durch die Kapillarwände hindurch. Von der Außenseite der gasselektiven Kapillare, die in einem Schutzrohr angeordnet ist, strömt die Flüssigkeit. Das durch die Kapillarwände diffundierte Gas wird durch eine Flüssigkeitsströmung beseitigt, die gleichzeitig die Adsorption des Kohlenwasserstoffdioxids aus der Umgebung in das Elutionsmittel verhindert.

Prototypgemäß soll in jedem Fall eine zusätzliche Einrichtung zur Entgasung des Elutionsmittels bzw. zur Beseitigung der störenden Wirkung des Elutionsmittels eingesetzt oder erhöhte Forderungen an die Elemente des chromatografischen Messkanals gestellt werden.

Die vorliegende Erfindung bezweckt die Beseitigung der beschriebenen Nachteile. Das gesetzte Ziel wird dadurch erreicht, dass im elektrodialytischen Elutionsmitteler zeuger zur IC vorgesehen ist:
- ein lonenquellenbehälter für Anionen bzw. Kationen,
- eine Elutionsmittelerzeugungskammer zur Erzeugung einer Säure oder Base, die ein Einlaufende und ein Auslaufende aufweist,
- eine Barriere zwischen dem lonenquelllenbehätter und der Elutionsmittelerzeugungskammer (Säure oder Base), die das Wandern von Flüssigkeit aus der Elutionsmittelerzeugungskammer in den lonenqullenbehälter und zurück verhindert und gleichzeitig die lonenübertragung gewährleistet, wobei Ionen nur mit einer negativen oder positiven Ladung übertragen werden,
- eine Wasserlösungsquelle, die mit dem Einlaufende der Elutionsmittelerzeugungskammer verbunden ist,
- eine erste Elektrode im lonenquellenbehäfter,
- eine zweite Elektrode in der Elutionsmittelerzeugungskammer,
- eine Stromquelle, die das Anlegen einer Potentialdifferenz zur Übertragung von Kationen (Anionen) in die Erzeugungskammer der Base bzw. Säure unter der Wirkung eines elektrischen Felds gewährleistet,
- eine erste Elektrode in der Elutionsmittelkammer in Form einer lonenaustauschmembran, auf deren Oberfläche eine elektronenleitende Schicht aufgetragen ist, wobei die lonenaustauschmembran als Außenwand der Elutionsmittelerzeugungskammer dient und gegenüber der Barriere liegt, die den lonenquellenbehälter von der Elutionsmittelerzeugungskammer trennt, wobei ferner die elektronenleitende Schicht auf der Außenseite (in Bezug auf die Elutionsmittelerzeugungskammer) der Ionenaustauschmembran liegt und die Elektrode im lonenqullenbehälter der Kationen- bzw. Anionenquelle in Form einer elektronenleitenden Schicht gestaltet ist, die auf der Oberfläche der den lonenqullenbehälter der Ionen/Kationenquelle von der Elutionsmittelerzeugungskammer trennenden Barriere liegt, wobei ferner die elektronenleitende Schicht auf der Außenseite der Barriere (in Bezug auf die Elutionsmittelerzeugungskammer) angeordnet ist und wobei die elektronenleitenden Schichten porös und aus Palladium oder Platin ausgeführt sind.

Die Erfindung wird durch Zeichnungen erläutert, die schematisch die Einrichtungen gemäß der Erfindung, den Zusammenbau dieser Einrichtungen und die in der Einrichtung laufenden Prozesse darstellen. Es zeigen:
- Fig. 1: eine schematische Darstellung einer Einrichtung gemäß der Erfin-dung,
- Fig. 2: schematische Prozesse, die in der Einrichtung bei Erzeugung des Alkali-Elutionsmittels ablaufen,
- Fig. 3: schematische Prozesse, die in der Einrichtung bei Erzeugung des Säure-Elutionsmittels ablaufen,
- Fig. 4: schematisch einen möglichen Zusammenbau der Einrichtung.

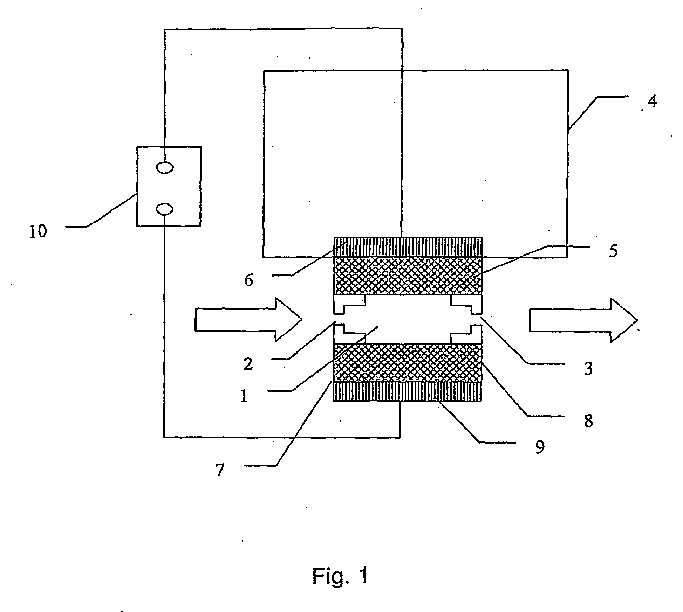

In Fig.1 ist eine Elutionsmittelerzeugungskammer 1 mit einem Einlaufende 2 und einem Auslaufende 3 von einem lonenquellenbehälter 4 mittels einer Barriere 5 getrennt, die eine lonenaustauschmembran bildet. Die Barriere 5 ist für den Lösungsfluss undurchlässig und besitzt die Eigenschaft, nur gleich geladene Ionen durchzulassen. Auf die Barrierenoberfläche, die zum lonenquellenbehälter 4 ausgerichtet ist, ist eine erste Elektrode 6 in Form einer elektronenleitenden, porösen Schicht angeordnet. Auf der der Barriere 5 gegenüberliegenden Seite ist die Elutionsmittelerzeugungskammer 1 durch eine zweite Elektrode 7 begrenzt. Die zweite Elektrode 7 ist in Form einer lonenaustauschmembran 8 mit einseitiger, elektronenleitender, poröser Beschichtung 9 ausgeführt. Die elektronenleitende, poröse Schicht ist auf die Außenseite (in Bezug auf die Elutionsmittelerzeugungskammer) der lonenaustauschmembran aufgetragen. Die Elektroden 6, 7 sind an eine Speisequelle 10 angeschlossen.

Die elektronenleitenden Schichten werden auf die Oberfläche der lonenaustauschmembran mittels chemischer Ablagerung aufgetragen. Als elektronenleitende Schichten werden Schichten aus Platin oder Palladium benutzt. Die Auswahl des Materials ist durch eine hohe chemische Beständigkeit von Platin und Palladium als Anode oder Kathode in den eingesetzten Lösungen bedingt. Zur elektronenleitenden, porösen Beschichtung kann beispielsweise folgendes Verfahren benutzt werden. Die Membran wird im Laufe von 1-2 Stunden in Wasser bis zur Quellung gewässert. Danach wird die mit einer Metallschicht beschichtete Membran in Kontakt mit einer Lösung folgender Zusammensetzung gebracht:
5g/l Palladiumchlorid,
100g/l Ammoniumhydroxid,
20min Kontaktzeit.

Danach wird die Membranoberfläche mit Wasser durchgespült und kommt für eine Minute lang in Kontakt mit einer bis 80°C erwärmten Hydrasinlösung (100g/l). Als Ergebnis bildet sich auf der Membranoberfläche eine katalytische Palladiumschicht.

Zur elektronenleitenden Palladiumbeschichtung wird die Membranoberfläche mit der aufgetragenen katalytischen Schicht in Kontakt mit einer Lösung folgender Zusammensetzung gebracht:
4g/l Palladiumchlorid,
300ml/l Ammoniumhydroxid (25%),
12g/l Trilon B,
2g/l Hydrasin.

Die Temperatur der Lösung beträgt 20 °C. Das Hydrasin wird der Lösung unmittelbar vor dem Einsatz zugegeben. Die Kontaktzeit der Membranoberfläche mit der Lösung beträgt 2-4 Stunden. Eine kürzere Kontaktzeit führt zur Bildung einer elektronenleitenden Schicht mit einem hohen elektrischen Widerstand. Eine längere Kontaktzeit führt zur Bildung einer nicht porösen Palladiumschicht, die die Ionenübertragung durch die Membran behindert.

Zur elektronenleitenden Platinbeschichtung wird die Membranoberfläche mit der aufgetragenen, katalytischen Palladiumschicht in Kontakt mit einer Lösung folgender Zusammensetzung gebracht:
40g/l (NH₄)₂PtCl₆,
320g/l NH₄Cl.

Die Temperatur der Lösung beträgt 50 °C. Die Kontaktzeit der Membranoberfläche mit der Lösung beträgt 2-4 Stunden. Eine kürzere Kontaktzeit führt zur Bildung einer elektronenleitenden Schicht mit einem hohen elektrischen Widerstand. Eine längere Kontaktzeit führt zur Bildung einer nicht porösen Platinschicht, die die lonenübertragung durch die Membran behindert.

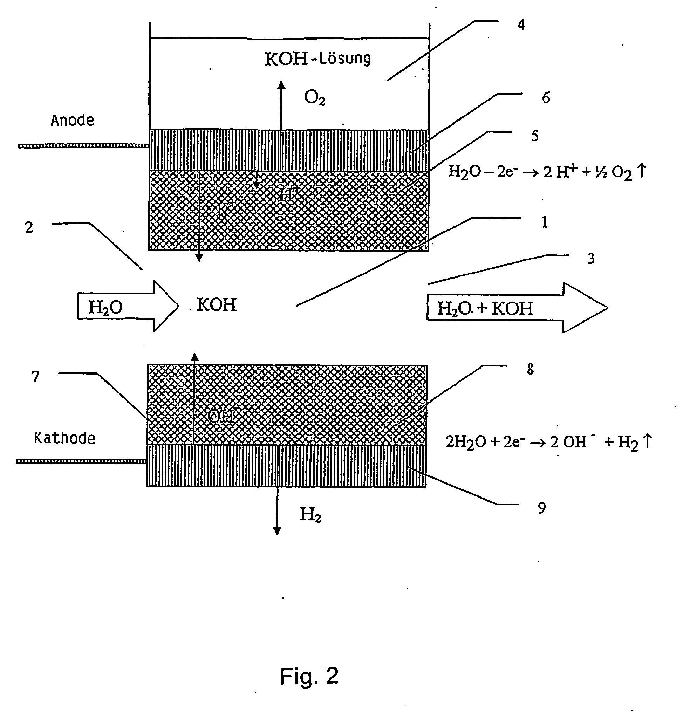

Verfahren, die im Laufe der Alkali-Elutionsmittelerzeugung in der Einrichtung gemäß der Erfindung ablaufen, sind schematisch in Fig. 2 dargestellt. Der Behälter 4 wird mit einer konzentrierten, Kationen enthaltenden Lösung gefüllt, wobei die Kationen dann zu einem Elutionsmittelbestandteil werden sollen. Wenn die Kaliumhydroxidlösung erzeugt wird, wird der Behälter mit der konzentrierten Kaliumhydroxid- bzw. Kaliumsalzlösung, beispielsweise Kaliumphosphatlösung, gefüllt. Falls ein Alkali-Elutionsmittel erzeugt wird, dient als Barriere zwischen der Erzeugungskammer und dem Behälter die Kationenaustauschmembran auf der Basis von beispielsweise perfluoriertem Schwefelpolymer mit der Elektrode 6 in Form einer elektronenleitenden Palladium- bzw. Platinschicht, die die Anode darstellt. Die Kationenaustauschmembran kann nur Kationen durchlassen.

Auf der der Barriere 5 gegenüberliegenden Seite ist die Elutionsmittelerzeugungskammer 1 durch die zweite Elektrode 7 getrennt, die als lonenaustauschmembran 8 mit der elektronenleitenden, porösen Schicht 9 ausgeführt ist. Die elektronenleitende Palladium- bzw. Platinschicht ist auf die äußere Seite (in Bezug auf Elutionsmittelerzeugungskammer) der Ionenaustauschmembran aufgetragen. Bei der Erzeugung eines Alkali-Elutionsmittel wird als Ionenaustauschmembran 8 eine Anionenaustauschmembran eingesetzt, die nur Anionen durchlässt.

In die Elutionsmittelerzeugungskammer 1 wird über das Einlaufende 2 Wasser geleitet. Wenn eine elektrische Spannung zwischen den Elektroden angelegt wird, läuft auf der zweiten Elektrode 7 (Kathode) folgende Zersetzungsreaktion des Wassers ab, das sich in der Membranphase befindet:
2H₂O + 2e⁻ → 2OH⁻ + H2↑

Der abgeschiedene Wasserstoff wird über die poröse Schicht 9 nach außen gebracht, da die lonenaustauschmembran 8 gasdicht ist. Infolge der Reaktion werden die Hydroxidionen über die Anionenaustauschmembran in die Elutionsmittelerzeugungskammer 1 übertragen. Das bei der Elektrolyse zersetzte Wasser in der Membranphase wird durch Einstellung des Gleichgewichts beim Kontakt der Membran mit der Lösung in der Elutionsmittelerzeugungskammer 1 nachgefüllt.

Gleichzeitig läuft an der ersten Elektrode 6 (Anode) folgende Wasserzersetzungsreaktion ab:
H₂O - 2e⁻→2H⁺ + ½O₂ ↑

Der abgeschiedene Sauerstoff wird über die elektronenleitende, poröse Schicht 6 und die Lösungsschicht im lonenquellenbehälter 4 nach außen gebracht, da die lonenaustauschmembran gasdicht ist. Wasserstoffionen gehen in die Lösung über. Da die Konzentration der Kaliumionen in der Lösung vier- bis fünfmal höher als die Konzentration der bei der Elektrolyse gebildeten Wasserstoffionen ist, werden in die Elutionsmittelerzeugungskammer 1 (zur Erhaltung der elektrischen Neutralität) durch die Kationenaustauschmembran überwiegend Kaliumionen übertragen. Der größte Teil der auf der Elektrode gebildeten Wasserstoffionen wird von dem abgeschiedenen Sauerstoff durch eine intensive Mischung der an der Elektrode liegenden Schicht ins Innere der Lösung transportiert. In der Lösung wirken die Wasserstoffionen mit den Hydroxidionen unter Wasserbildung zusammen.

Als Ergebnis wird in der Elutionsmittelerzeugungskammer 1 eine Kaliumhydroxidlösung erzeugt, die aus dem Auslaufende 3 ausfließt. Die Kaliumhydroxidkonzentration am Auslaufende 3 der Elutionsmittelerzeugungskammer 1 wird durch die Flussrate der Lösung und den Stromwert in der Einrichtung bestimmt. Durch Änderung des Stromwerts in der Einrichtung kann die Kaliumhydroxidkonzentration im erzeugten Elutionsmittel leicht eingestellt werden. Somit wird in der Einrichtung ein Etutionsmittel erzeugt, das keine gelösten Gase enthält und keine Entgasung braucht. Das Elutionsmittel gelangt dann über das Auslaufende 3 in das ionenchromatografische System.

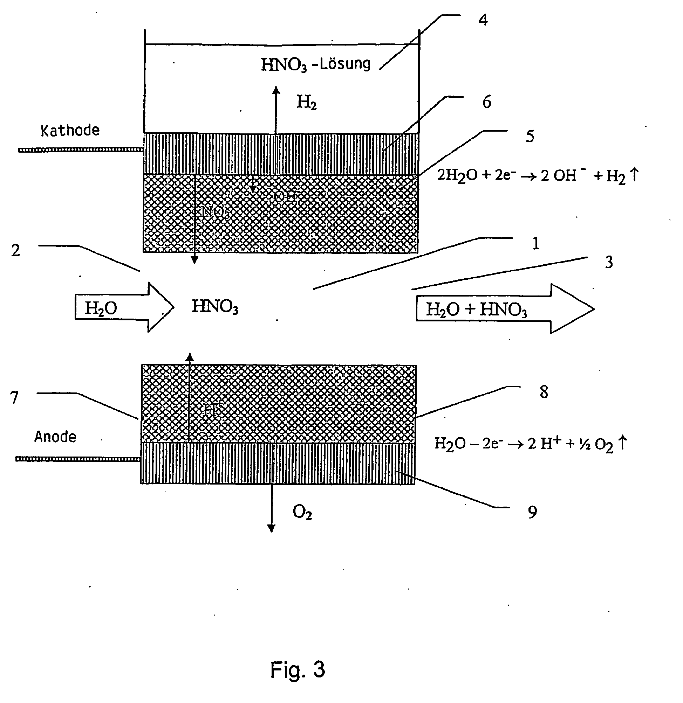

Prozesse, die bei Erzeugung des Säure-Elutionsmittels ablaufen, werden in Fig. 3 schematisch dargestellt. Der lonenqueltenbehälter 4 wird mit der konzentrierte Anionen enthaltenden Lösung gefüllt; diese sollen dann zu einem Elutionsmittelbestandteil werden. Wenn Salpetersäurelösung erzeugt wird, wird der lonenquellenbehälter mit einer 1-2mol/l-konzentrierten Salpetersäurelösung, beispielsweise Kaliumnitratlösung, gefüllt. Falls ein Säure-Elutionsmittel erzeugt wird, dient als Barriere 5 zwischen der Elutionsmittelerzeugungskammer 1 und dem lonenquellenbehälter 4 die Anionenaustauschmembran mit der ersten Elektrode 6 in Form einer elektronenleitenden, porösen Palladium- bzw. Platinschicht, die die Anode darstellt. Die Anionenaustauschmembran kann nur Anionen durchlassen.

Auf der der Barriere 5 gegenüberliegenden Seite ist die Elutionsmittelerzeugungskammer 1 durch die zweite Elektrode 7 getrennt, die als lonenaustauschmembran 8 mit der elektronenleitenden, porösen Schicht 9 ausgeführt wird. Die elektronenleitende Palladium- bzw. Platinschicht ist auf der äußere Seiten (in Bezug auf Elutionsmittelerzeugungskammer) der Ionenaustauschmembran aufgetragen. Bei der Erzeugung eines Säure-Elutionsmittels wird als Ionenaustauschmembran 8 eine Kationaustauschmembran eingesetzt, die nur Kationen durchlässt.

In die Elutionsmittelerzeugungskammer 1 wird über das Einlaufende 2 Wasser geleitet. Beim Anlegen einer elektrischen Spannung läuft an der zweiten Elektrode 7 (Anode) folgende Zersetzungsreaktion des Wassers ab, das sich in der Membranphase befindet:
H₂O - 2e⁻ →2H⁺ + ½O₂↑

Der abgeschiedene Sauerstoff wird über die poröse Schicht 9 nach außen gebracht, da die Ionenaustauschmembran 8 gasdicht ist. Die infolge der Reaktion gebildeten Wasserstofftonen werden über die Kationenaustauschmembran in die Elutionsmittelerzeugungskammer 1 übertragen. Das bei der Elektrolyse zersetzte Wasser in der Membranphase wird durch Einstellung des Gleichgewichts beim Kontakt der Membran mit der Lösung in der Elutionsmittelerzeugungskammer 1 nachgefüllt.

Gleichzeitig läuft an der ersten Elektrode 6 (Kathode) folgende Wasserzersetzungsreaktion ab:
2H₂O + 2e⁻ → 2OH⁻+ H₂ ↑

Der abgeschiedene Sauerstoff wird über die poröse Schicht 9 nach außen gebracht, da die lonenaustauschmembran 8 gasdicht ist. Die Hydroxidionen gehen in die Lösung über. Da die Konzentration der Nitrationen in der Lösung vier- bis fünfmal höher als die Konzentration der zu bildenden Hydroxidionen ist, werden in die Elutionsmittelerzeugungskammer 1 (zur Erhaltung der elektrischen Neutralität) über die Anionenaustauschmembran überwiegend Nitrationen übertragen. Als Ergebnis bildet sich in der Elutionsmittelerzeugungskammer 1 eine Salpetersäurelösung, die über den Auslauf 3 ausfließt. Die Konzentration der Salpetersäure am Auslauf der Elutionsmittelerzeugungskammer 1 wird durch die Flussrate der Lösung und den Stromwert in der Einrichtung bestimmt. Durch Änderung des Stromwerts in der Einrichtung kann die Salpetersäurekonzentration im erzeugten Elutionsmittel leicht eingestellt werden. Somit wird in der Einrichtung ein Elutionsmittel erzeugt, das keine gelösten Gase enthält und keine Entgasung braucht. Das Elutionsmittel gelangt dann über das Auslaufende 3 in das ionenchromatografische System.

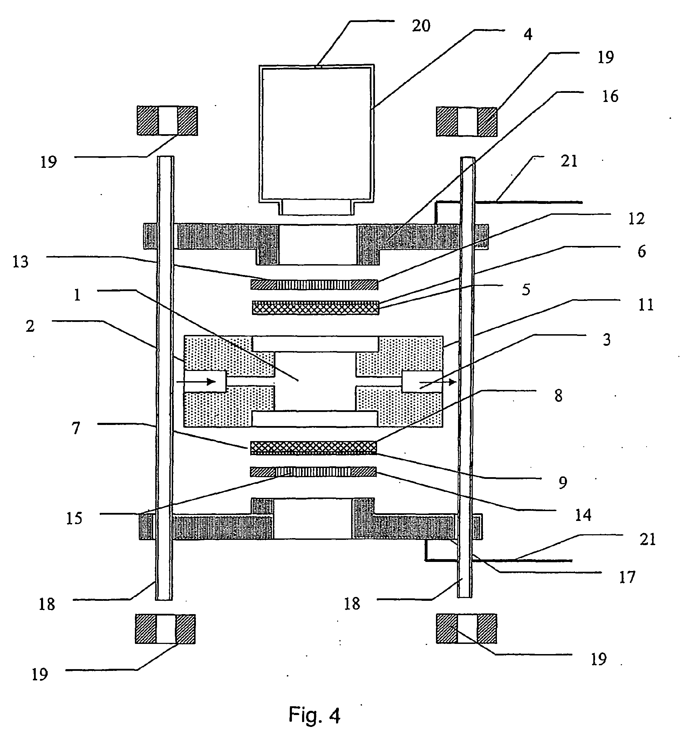

Die Fig. 4 stellt einen möglichen Zusammenbau der Einrichtung schematisch dar. Ein Gehäuse 11 der Elutionsmittelerzeugungskammer 1 wird in einem inerten, elektrisch nicht leitenden Material in Form eines Zylinders ausgeführt. Auf der Seitenoberfläche sind das Einlaufende 2 und das Auslaufende 3 für die Lösung angeordnet. Im oberen Gehäuseabschnitt ist die Barriere 5 in Form einer Scheibe angeordnet, deren Durchmesser größer als der innere Gehäusedurchmesser ist. Die Barriere 5 stellt eine lonenaustauschmembran mit der elektronleitenden Schicht als erste Elektrode 6 auf ihrer Oberfläche dar. Auf die Barriere 5 ist im unteren Teil ein Ring 12 als zweite Elektrode 7 aufgesetzt, auf dem ein Gitter 13 als lonenaustauschmembran 8 befestigt ist. Der Ring 12 und das Gitter 13 bestehen aus Metall, das gegenüber den zur Dialyse eingesetzten Lösungen inert ist, beispielsweise rostfreier Stahl, Nickel (bei Kathodenbeanspruchung) oder Titan (bei Anodenbeanspruchung). Der Ring mit dem Gitter arbeitet als Stromzuführung zur elektronenleitenden Membranoberfläche und stellt eine hohe Bruchfestigkeit der Membran bei hohen Drucken in der Elutionsmittelerzeugungskammer sicher.

Im unteren Gehäuseabschnitt ist gegenüber der Barriere 5 die zweite Elektrode 7 in Form einer Scheibe angeordnet, deren Durchmesser größer als der innere Gehäusedurchmesser ist. Die zweite Elektrode 7 stellt eine lonenaustauschmembran 8 mit der elektronenleitenden Schicht 9 auf ihrer Oberfläche dar. Auf die zweite Elektrode 7 wird ein Ring 14 aufgesetzt, auf dem ein Gitter 15 befestigt ist. Der Ring 14 und das Gitter 15 bestehen aus Metall, das gegenüber den zur Dialyse eingesetzten Lösungen inert ist, beispielsweise rostfreier Stahl, Nickel (bei Kathodenbeanspruchung) oder Titan (bei Anodenbeanspruchung). Der Ring 14 mit dem Gitter 15 arbeitet als Stromzuführung zur elektronenleitenden Membranoberfläche und stellt eine hohe Bruchfestigkeit der Membran bei hohen Drucken in der Elutionsmittelerzeugungskammer 1 sicher.

Das Kammergehäuse zusammen mit Membranen und Ringen mit Gittern wird mittels Metallflansche 16 und 17, die mit Stiften 18 und Muttern 19 zusammengezogen werden, in einer einheitlichen Einrichtung hermetisch angeordnet. Flansche sind gegen die in der Dialyse eingesetzten Lösungen aus inertem Metall gefertigt, beispielsweise rostfreier Stahl, Nickel (bei Kathodenbeanspruchung) oder Titan (bei Anodenbeanspruchung). Die Stifte 18 sind aus nicht leitfähigem Material gefertigt. An den Flanschen 16, 17 sind Stromversorgungsleitungen 21 zur Stromzufuhr zur Einrichtung befestigt. An den oberen Flansch 16 ist der lonenquellenbehälter 4 mit einer Öffnung 20 zur Abfuhr der bei der Elektrolyse entwickelten Gase hermetisch, beispielsweise mittels Schraubverbindungen, angeordnet.

Im Unterschied zum Prototyp ermöglicht der Einsatz einer Barriere 5 mit einer elektronleitenden Schicht auf deren Oberfläche, einen Metallring mit Gitter zu installieren, der eine hohe Bruchfestigkeit der Membran bei hohen Drucken in der Elutionsmittelerzeugungskammer 1 gewährleistet. In der Prototyp-Einrichtung wird die Membranbruchfestigkeit bei hohen Drucken durch einen kleineren Barrieredurchmesser (0,4-0,5 cm) und eine größere Dicke (3-5 mm) der Barriere gewährleistet. Diese beiden Faktoren führen zum Anstieg der Spannung im System (bei dem vorgegebenen Strom) und als Folge zum Anstieg der Wärmeentwicklung in der Einrichtung. In der Einrichtung gemäß der Erfindung ist es möglich, eine Barriere 5 mit einem Durchmesser von 1,0-3,0 cm und einer Dicke von 0,5-1,0 mm einzusetzen. In diesem Fall steigt der elektrische Widerstand der Barriere 5 selbst bei sonst gleichen Voraussetzungen dreißig- bis hundertmal an.

Eine zusätzliche Wärmequelle in der Prototyp-Einrichtung ist der elektrische Widerstand der Lösungsschicht zwischen der Barriere 5 und der ersten Elektrode 6 im lonenquellenbehälter 4 oder der Schicht aus einem Ionenaustauschharz, mit dem der lonenquellenbehäfter 4 gefüllt ist. Bei der Einrichtung gemäß der Erfindung fehlt diese Wärmequelle (die erste Elektrode 6 wird an der Barrierenoberfläche angeordnet).

Bei der Einrichtung gemäß der Erfindung fehlt die Gasentwicklung in der Elutionsmittelerzeugungskammer 1 und als Folge fehlt die Notwendigkeit zusätzlicher Vorrichtungen, die den störenden Einfluss der gelösten Gase auf den Prozess der chromatografischen Trennung und Detektion beseitigen.

### Verwendete Informationsquellen:

1. W. S. Gurskij, L. A. Godon, S. W. Timofejew, Erzeugung von Hydroxid-Elutionsmitteln zur ionenchromatografischen Anionenbestimmung, "Sch. Werkslabor", Band 63, Nr. 12, S.11, 1997
2. US-Patent 5 45 204
3. US-Patent 6 225 129

## Patentansprüche

1. Elektrodialytischer Elutionsmittelerzeuger zur lonenchromatografie, der Folgendes aufweist:
- einen Ionenquellenbehälter (4),
- eine Elutionsmittelerzeugungskammer (1) zur Elutionsmittelerzeugung, die ein Einlaufende (2) und ein Auslaufende (3) aufweist,
- eine Barriere (5) zwischen dem lonenquellenbehälter (4) und der Elutionsmittelerzeugungskammer (1), wobei diese Barriere (5) das Wandern der Flüssigkeit aus der Elutionsmittelerzeugungskammer (1) in den lonenquellenbehälter (4) und zurück verhindert, gleichzeitig die lonenübertragung gewährleistet und in Form einer lonenaustauschmembran ausgeführt ist,
- eine Wasserlösungsquelle, die mit dem Einlaufende (2) der Elutionsmittelerzeugungskammer (1) verbunden ist,
- eine erste Elektrode (6) im lonenquellenbehälter (4),
- eine zweite Elektrode (7) in der Elutionsmittelerzeugungskammer (1), die gegenüber der ersten Elektrode (6) angeordnet ist,
- eine Stromquelle (10), die das Anlegen einer Spannung zwischen den Elektroden (6, 7) zur Übertragung von lonen in die Elutionsmittelerzeugungskammer (1) unter der Wirkung eines elektrischen Felds gewährleistet,
**dadurch gekennzeichnet,**
**dass** die zweite Elektrode (7) ebenfalls als Ionenaustauschmembran (8) mit einer elektronenleitenden Schicht auf ihrer Oberfläche ausgebildet ist, wobei die lonenaustauschmembran (8) als Außenseite der Elutionsmittelerzeugungskammer (1) dient und die leitfähige Schicht auf die Außenseite der lonenaustauschmembran (8) in Bezug auf die Elutionsmittelerzeugungskammer (1) und auf die Gegenseite in Bezug auf die Barriere (5) aufgetragen ist.

2. Elutionsmittelerzeuger nach Anspruch 1,
**dadurch gekennzeichnet,**
**dass** die erste Elektrode (6) im lonenquellenbehälter (4) in Form einer elektronenleitenden Schicht ausgebildet ist, die auf die Oberfläche der den lonenquellenbehälter (4) von der Elutionsmittelerzeugungskammer (1) trennenden Barriere (5) aufgetragen ist, wobei die elektronenleitende Schicht auf die Außenseite der Oberfläche der Barriere (5) in Bezug auf die Elutionsmittelerzeugungskammer (1) aufgetragen ist.

3. Elutionsmittelerzeuger nach Anspruch 1 oder 2,
**dadurch gekennzeichnet,**
**dass** die elektronenleitenden Schichten aus Palladium bzw. Platin bestehen.

4. Elutionsmittelerzeuger nach einem der Ansprüche 1 bis 3,
**dadurch gekennzeichnet,**
**dass** die elektronenleitenden Schichten porös ausgebildet sind.

5. Elutionsmittelerzeuger nach einem der Ansprüche 1 bis 4,
**dadurch gekennzeichnet,**
**dass** auf die elektronenleitenden Schichten ein Metallgitter (13, 15) aus rostfreiem Stahl bei Kathodenbeanspruchung bzw. aus Titan bei Anodenbeanspruchung aufgesetzt ist.

## Claims

1. An electrodialytic eluent generator for use in ion chromatography, having the following:
- an ion source container (4),
- an eluent generation chamber (1) for generating eluent, having an inlet end (2) and an outlet end (3),
- a barrier (5) between the ion source container (4) and the eluent generation chamber (1), wherein this barrier (5) prevents the movement of the liquid from the eluent generation chamber (1) into the ion source container (4) and back, simultaneously assures the ion transfer, and is designed in the form of an ion exchange membrane,
- a water solution source, which is connected with the inlet end (2) of the eluent generation chamber (1),
- a first electrode (6) in the ion source container (4),
- a second electrode (7) in the eluent generation chamber (1), which is arranged opposite the first electrode (6),
- an electrical current source (10), which assures the application of a voltage between the electrodes (6, 7) for transferring ions into the eluent generation chamber (1) by means of the effect of an electrical field,
**characterized in that**
the second electrode (7) is also embodied as an ion exchange membrane (8), having an electron-conducting layer on its surface, wherein the ion exchange membrane (8) is used as the outside of the eluent generation chamber (1), and the conductive layer is applied to the outside, in respect to the eluent generation chamber (1), of the ion exchange membrane (8) and, in respect to the barrier (5), to the opposite side.

2. The eluent generator in accordance with claim 1,
**characterized in that**
the first electrode (6) in the ion source container (8) is embodied in the form of an electron-conducting layer, which has been applied to the surface of the barrier (5) which separates the ion source container (4) from the eluent generation chamber (1), wherein the electron-conducting layer has been applied to the outside, in relation to the eluent generation chamber (1), of the surface of the barrier (5).

3. The eluent generator in accordance with claim 1 or 2,
**characterized in that**
the electron-conducting layers consist of palladium, or respectively platinum.

4. The eluent generator in accordance with one of claims 1 to 3,
**characterized in that**
the electron-conducting layers have been designed to be porous.

5. The eluent generator in accordance with one of claims 1 to 4,
**characterized in that**
in case of stresses on the cathode, a metal grating (13, 15) of stainless steel is placed on the electron-conducting layers or, in case of stresses on the anode, one made of titanium.

## Revendications

1. Générateur d'éluant électrodialytique pour la chromatographie ionique, qui présente:
- un réservoir de source d'ions (4),
- une chambre de génération d'éluant (1) pour la génération d'éluant qui présente une extrémité d'entrée (2) et une extrémité de sortie (3),
- une barrière (5) entre le réservoir de source d'ions (4) et la chambre de génération d'éluant (1), cette barrière (5) empêchant la migration du liquide de la chambre de génération d'éluant (1) dans le réservoir de source d'ions (4) et inversement, assurant en même temps la transmission des ions et étant réalisée sous la forme d'une membrane échangeuse d'ions,
- une source de solution aqueuse qui est reliée à l'extrémité d'entrée (2) de la chambre de génération d'éluant (1),
- une première électrode (6) dans le réservoir de source d'ions (4),
- une deuxième électrode (7) dans la chambre de génération d'éluant (1), qui est disposée en face de la première électrode (6),
- une source de courant (10) qui assure l'application d'une tension entre les électrodes (6, 7) pour la transmission d'ions dans la chambre de génération d'éluant (1) sous l'action d'un champ électrique,
**caractérisé en ce**
**que** la deuxième électrode (7) est également réalisée sous la forme d'une membrane échangeuse d'ions (8) avec une couche conductrice d'électrons à sa surface, la membrane échangeuse d'ions (8) servant de face extérieure de la chambre de génération d'éluant (1) et la couche conductrice étant appliquée sur la face extérieure de la membrane échangeuse d'ions (8) par rapport à la chambre de génération d'éluant (1) et sur la face opposée par rapport à la barrière (5).

2. Générateur d'éluant selon la revendication 1,
**caractérisé en ce**
**que** la première électrode (6) est réalisée dans le réservoir de source d'ions (4) sous la forme d'une couche conductrice d'électrons qui est appliquée à la surface de la barrière (5) séparant le réservoir de source d'ions (4) de la chambre de génération d'éluant (1), la couche conductrice d'électrons étant appliquée sur la face extérieure de la surface de la barrière (5) par rapport à la chambre de génération d'éluant (1).

3. Générateur d'éluant selon la revendication 1 ou 2,
**caractérisé en ce**
**que** les couches conductrices d'électrons sont constituées de palladium ou de platine.

4. Générateur d'éluant selon l'une des revendications 1 bis 3,
**caractérisé en ce**
**que** les couches conductrices d'électrons sont poreuses.

5. Générateur d'éluant selon l'une des revendications 1 à 4,
**caractérisé en ce**
**qu'**une grille métallique (13, 15) en acier inoxydable en cas de sollicitation de la cathode ou en titane en cas de sollicitation de l'anode est placée sur les couches conductrices d'électrons.
